# EUROPÄISCHE PATENTSCHRIFT

(11) **EP 1 247 441 B1**
(45) Veröffentlichungstag und Bekanntmachung des Hinweises auf die Patenterteilung: **22.06.2005**
(21) Anmeldenummer: 02003005.2
(22) Anmeldetag: 12.02.2002
(51) Int. Cl.: A01D 75/18

(54) **Erntemaschine mit Metalldetektionseinrichtung**
Harvesting machine with a metal-detecting system
Machine de récolte comportant un système détecteur de métaux

(30) Priorität: 04.04.2001 DE 10116676
(43) Veröffentlichungstag der Anmeldung: 09.10.2002
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Berth, Dieter, Dipl.-Ing., 01844 Neustadt (DE)
(74) Vertreter: Pott, Ulrich

(56) Entgegenhaltungen:
- DE-A- 3 019 166
- DE-A- 19 912 407
- US-A- 4 322 937
- US-A- 5 797 250

## Beschreibung

Die Erfindung bezieht sich auf eine Erntemaschine zum Ernten und/oder Weiterverarbeiten von Erntegut mit einem eine Metalldetektionseinrichtung zur Erkennung von metallischen Elementen in einem Überwachungsbereich eines Erntegutstromes umfassenden Förderer, dem ein Vorsatzgerät zur Aufnahme von Erntegut, beispielsweise ein Pickup-Vorsatzgerät vorgeordnet ist, wobei das Vorsatzgerät einer Eintrittsöffnung des Förderers zur Weiterverarbeitung des Erntegutes zugeordnete Förder- und Führungselemente aufweist und wobei die Metalldetektionseinrichtung Magneten zur Erzeugung eines Magnetfeldes umfaßt, so daß in Abhängigkeit von elektrischen Signalen bei Detektion von Metallteilen im Erntegut mittels eines Steuersignals Antriebselemente des Förderers und/oder des Vorsatzgerätes schaltbar sind.

Eine Erntemaschine der vorgenannten Art ist aus der DE 199 12 407 A1 bekannt. Diese Erntemaschine ist z.B. als Feldhäcksler ausgebildet mit einem Frontanbaugerät, um das Erntegut abzuschneiden, weiterzufördern und mittels Einzugswalzen und Preßwalzen einer nachfolgenden Häckseleinrichtung zuzuführen.

Sind in dem Erntegut metallische Fremdkörper vorhanden, die mit dem Erntegut aufgenommen worden sind, sind Beschädigungen von z.B. der Häckseltrommel zu befürchten. Ebenfalls sind bei der Verfütterung von mit metallischen Teilen verunreinigtem Erntegut Tierverluste im Bereich des Möglichen.

Um derartiges zu vermeiden, ist die Erntemaschine der vorgenannten Art mit einer Metalldetektionseinrichtung versehen, die in einer unteren Walze eines Einzugswalzenpaares vorgesehen ist. Dazu sind innerhalb der Walze Magneten angeordnet, deren Magnetfeld in Richtung der zugeordneten oberen Walze ausgerichtet ist, um den zwischen den Walzen befindlichen Erntegutstrom auf metallische Fremdkörper hin zu untersuchen.

Nachteilig hierbei ist, daß etwaige metallische Fremdkörper erst unmittelbar im Bereich der Einzugswalzen und mithin unmittelbar vor der Zuführung zur Häckseltrommel detektiert werden können.

Die Zeit zur Erkennung von metallischen Fremdkörpern ist aber zum einen abhängig von der Schnelligkeit der Metalldetektionseinrichtung, zum anderen aber auch wesentlich abhängig von z.B. der eingestellten Häcksellänge und damit der Zuführstrecke, die der metallische Fremdkörper von der Erkennung bis zum Häckselorgan zurückzulegen hat. Die Metalldetektion bei der vorbekannten Einrichtung erlaubt es daher nicht, z.B. Forderungen nach einem längeren Häckselgemisch nachzukommen, womit eine Erhöhung der Zuführgeschwindigkeit einhergeht. Damit geht nämliche eine Verringerung der Erkennungszeit für metallische Fremdkörper einher.

Es ist daher Aufgabe der vorliegenden Erfindung, eine Erntemaschine der eingangs genannten Art zur Verfügung zu stellen, mit der Erkennungszeiten für die Metalldetektion zu verlängern sind, um auch bei schnelleren Zuführgeschwindigkeiten noch eine sichere Metalldetektion mit anschließender Betätigung von Sicherungseinrichtungen führen zu können.

Zur Lösung dieser Aufgabe zeichnet sich die Erntemaschine der eingangs genannten Art dadurch aus, daß die Magnete der Metalldetektionseinrichtung derart ausgerichtet sind, daß eine in Richtung der Eintrittsöffnung des Förderers zum Vorsatzgerät hin ausgerichtetes Magnetfeld erzeugbar ist, und daß die der Eintrittsöffnung unmittelbar vorgeordneten Teile des Vorsatzgerätes sowie die Eintrittsöffnung begrenzende Wandungsbereiche sowie unmittelbar der Eintrittsöffnung des Förderers zugeordnete bewegbare Teile des Vorsatzgerätes aus einem nicht magnetisierbaren Material bestehen.

Wesentliche Ausgestaltungen der Erntemaschine nach der Erfindung sind in den Ansprüchen 2 und 6 angegeben.

Durch das zur Eintrittsöffnung des Förderers hin ausgerichtete Magnetfeld ist eine wesentlich frühere Metalldetektion im aufgenommenen Erntegutstrom zu vollziehen. Da das Vorsatzgerät darüber hinaus auch zu Zwecken einer guten und sauberen Aufnahme des Erntegutes Bodenunebenheiten zu folgen hat, beschreiben Vorsatzgeräte unterschiedliche Bewegungen zu den Grundkomponenten der Erntemaschine, beispielsweise einem Häckselgerät. Eine solche Relativbewegung des Vorsatzgerätes zu Grundkomponenten der Erntemaschine kann sowohl in Richtung der Fahrzeuglängsachse der Erntemaschine als auch quer zur Fahrtrichtung erfolgen. Dadurch kann es zu relativen Bewegungen eines Vorsatzgerätes zu Grundkomponenten der Erntemaschine im Übergabebereich und mithin unmittelbar vor der Eintrittsöffnung kommen. Durch das in Richtung der Eintrittsöffnung ausgerichtete Magnetfeld können auch bei solchen Betriebsbedingungen relativ früh Störsignale empfangen werden bei Detektion eines metallischen Fremdkörpers, so daß dadurch das Ansprechverhalten einer Schalteinrichtung z.B. zum Stoppen eines Häckselaggregates verbessert ist. Um darüber hinaus auch bei solchen sich bewegenden relativen Teilen des Vorsatzgerätes magnetische Störeinflüsse auszugleichen, sind die der Eintrittsöffnung vorgeordneten bewegten Teile des Vorsatzgerätes sowie die die Eintrittsöffnung begrenzenden Wandungsbereiche aus einem nicht magnetisierbaren Material. Damit ist im rauhen Alltagsbetrieb eine sichere Erkennung von metallischen Fremdkörpern zu vollziehen, so daß sowohl bei Relativbewegungen des Vorsatzgerätes zu Grundkomponenten der Erntemaschine als auch bei unterschiedlichen Betriebsbedingungen, z.B. bei unterschiedlichen Zuführgeschwindigkeiten und damit auch bei unterschiedlichen Schnittlängen, eine sichere Detektion von metallischen Fremdkörpern ermöglicht ist.

Zur weiteren Erläuterung wird auf die nachfolgende Beschreibung und die Zeichnung verwiesen. In der Zeichnung zeigen:

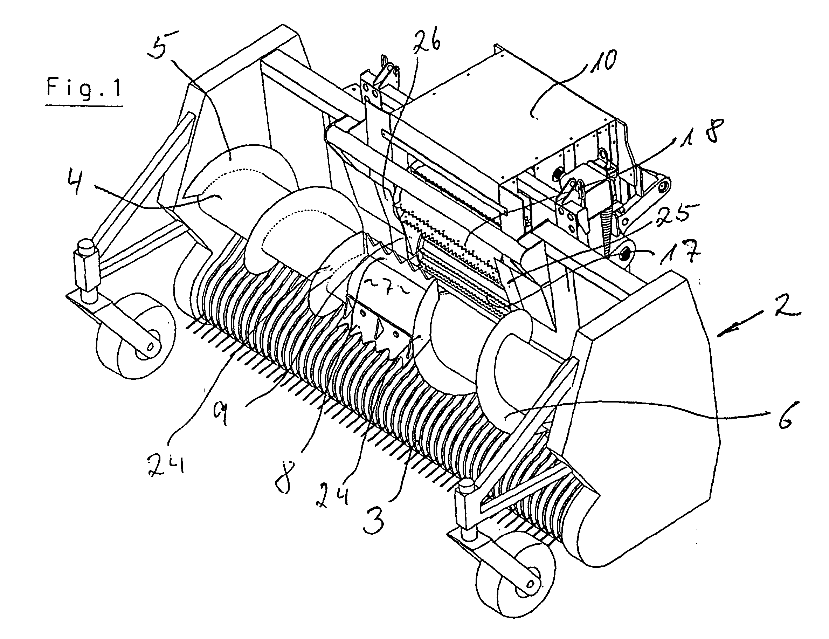

- Fig. 1: in einer perspektivischen Darstellung ein als Pickup ausgebildetes Vorsatzgerät für eine Erntemaschine nach der Erfindung;
- Fig. 2: eine Ansicht von hinten (perspektivisch) auf das Vorsatzgerät nach Fig. 1 mit seitlicher Darstellung des nachgeordneten Förderers, und
- Fig. 3: eine Seitenansicht eines Ausführungsbeispiels einer Erntemaschie nach der Erfindung mit vorgebauter Pickup (Fig. 1) sowie Förderer (Fig. 2) sowie nachgeordneter Häckseltrommel (teilweise).

Die in der Zeichnung allgemein mit 1 bezifferte Erntemaschine zum Ernten und/oder Weiterarbeiten von Erntegut soll in dem gezeigten Ausführungsbeispiel als Feldhäcksler ausgebildet sein und ein als Pickup ausgebildetes Vorsatzgerät 2 haben.

Die Pickup hat untere Aufnehmer und Förderer 3 sowie eine Förderschnecke 4 mit Förderronden 5 und 6, die gegensinnig ausgerichtet sind, um einen mittleren Abschnitt 7 zuzufördern, der mit Mitnehmern 8 versehen ist. Der mittlere Abschnitt 7 der Schnecke 4 und damit auch die Mitnehmer 8 sind einer allgemein mit 9 bezifferten Eintrittsöffnung eines Förderers 10 zugeordnet, die in dem gezeigten Ausführungsbeispiel als Preßvorrichtung ausgebildet sein soll.

Diese Preßvorrichtung hat eine untere Zuführwalze 17 und eine obere Zuführwalze 18.

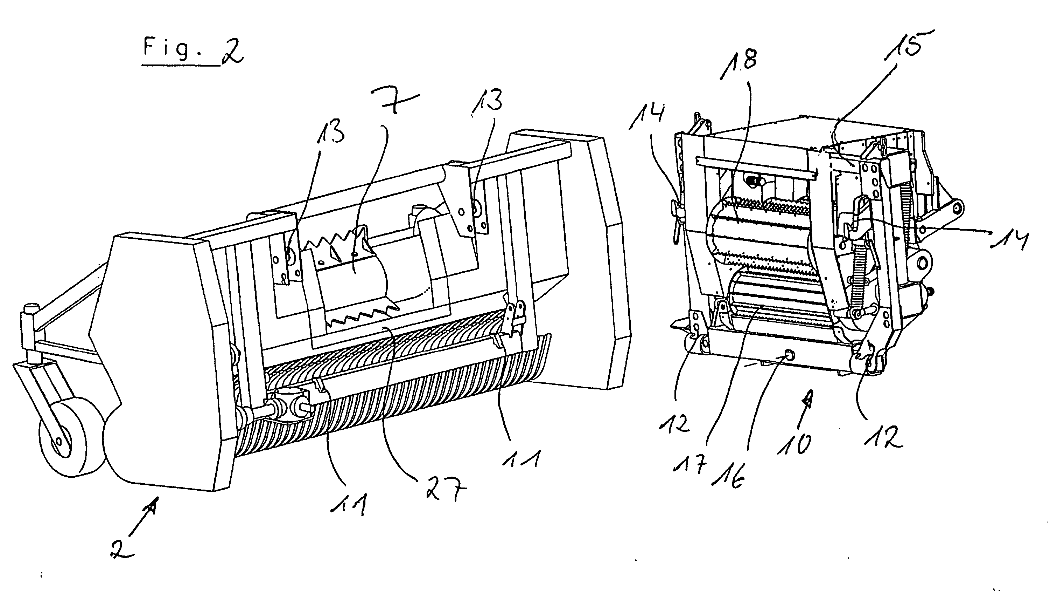

Wie im einzelnen näher der Fig. 2 zu entnehmen ist, ist der Förderer 10 über untere Anbaustellen 12 mit unteren Anbaustellen 11 des Vorsatzgerätes 11 zu verbinden, wobei obere Anbaustellen 13 der Pickup mit oberen Anbaustellen 14 des Förderers 10 zu verbinden sind. Der Adapterrahmen 15 des Förderers 10 ist um eine Schwenkachse 16 schwenkbar.

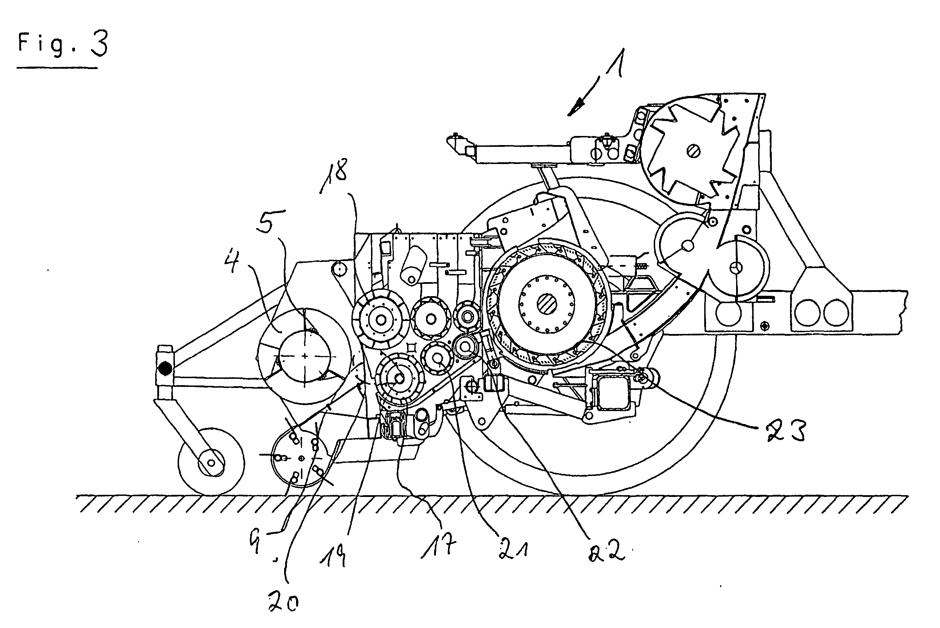

Die untere Einzugswalze 17 weist eine im einzelnen nicht näher gezeigte Metalldetektionseinrichtung 19 auf, die ein Magnetfeld erzeugt, das in Fig. 3 strichpunktiert mit der Bezugsziffer 20 angedeutet ist. Dieses Magnetfeld ist in Richtung der Eintrittsöffnung 8 ausgerichtet und erstreckt sich mithin unterhalb der oberen Einzugswalze 18.

Zwischen den Einzugswalzen wird der von der Pickup 2 aufgenommene Erntegutstrom weitergefördert über weitere Walzenpaare 21, 22, und einer nachgeordneten Häckseltrommel 23 der Erntemaschine zugeführt.

Um die metallischen Fremdkörper im Gutstrom sicher erfassen zu können, insbesondere auch bei Relativbewegungen des Vorsatzgerätes 2 um die Schwenkachse 16, sind die der Eintrittsöffnung 8 unmittelbar vorgeordneten Teile, nämlich die Mitnehmer 8 der Schnecke 4 sowie die der Einzugsöffnung 8 vorgeordneten Abschnitte 24 der Förderronden 5 und 6 bzw. Schneckengänge der Schnecke 4 aus einem nicht magnetischen Material hergestellt. Gleiches gilt auch für die Seitenbereiche 25 und 26 der die Eintrittsöffnung 9 begrenzenden Wandungsbereiche sowie für das Bodenblech 27 (Fig. 2).

## Patentansprüche

1. Erntemaschine zum Ernten und/oder Weiterverarbeiten von Erntegut mit einem eine Metalldetektionseinrichtung (19) zur Erkennung von metallischen Elementen in einem Überwachungsbereich eines Erntegutstromes umfassenden Förderer (10), dem ein Vorsatzgerät (2) zur Aufnahme von Erntegut, beispielsweise ein Pickup-Vorsatzgerät, vorgeordnet ist, wobei das Vorsatzgerät (2) einer Eintrittsöffnung (9) des Förderers (10) zur Weiterverarbeitung des Erntegutes zugeordnete Förder- und Führungselemente aufweist und wobei die Metalldetektionseinrichtung (19) Magneten zur Erzeugung eines Magnetfeldes (20) umfaßt, so daß in Abhängigkeit von elektrischen Signalen bei Detektion von Metallteilen im Erntegut mittels eines Steuersignals Antriebselemente des Förderers (10) des Vorsatzgerätes (2) und/oder weiteren nachgeordneten Maschinenkomponenten schaltbar sind, **dadurch gekennzeichnet, daß** die Magnete der Metalldetektionseinrichtung (19) derart ausgerichtet sind, daß ein in Richtung der Eintrittsöffnung (9) des Förderers (10) zum Vorsatzgerät (2) hin ausgerichtetes Magnetfeld (20) erzeugbar ist und daß die Eintrittsöffnung (9) begrenzende Wandungsbereiche (25,26,27) sowie unmittelbar der Eintrittsöffnung (9) des Förderers (10) vorgeordnete bewegbare Teile (8,24) des Vorsatzgerätes (2) aus einem nicht magnetisierbaren Material bestehen.

2. Erntemaschine nach Anspruch 1 mit einem Vorsatzgerät (2), das eine der Eintrittsöffnung (9) vorgeordnete rotierbare Förderschnecke (4) aufweist, **dadurch gekennzeichnet, daß** die der Eintrittsöffnung (9) vorgeordneten Abschnitte einer Förderronde (5,6) aus einem nicht magnetisierbarem Material bestehen.

3. Erntemaschine nach Anspruch 2, **dadurch gekennzeichnet, daß** die Förderschnecke (4) der Eintrittsöffnung (9) vorgeordnete Mitnehmer (8) aufweist, die aus einem nicht magnetisierbarem Material bestehen.

4. Erntemaschine nach einem der Ansprüche 1 bis 3, **dadurch gekennzeichnet, daß** der Förderer (10) zwei übereinander angeordnete Einzugswalzen (17,18) aufweist, wobei die untere Einzugswalze (17) mit der Metalldetektionseinrichtung (19) versehen ist, deren Magnete um deren Längsmittelachse derart verschwenkt sind, daß sie ein Magnetfeld (20) erzeugen, das sich unterhalb des Mantels der zugeordneten oberen Einzugswalze (18) in Richtung der Eintrittsöffnung (9) des Vorsatzgerätes (2) erstreckt.

5. Erntemaschine nach einem der Ansprüche 1 bis 4, **dadurch gekennzeichnet, daß** die Förderschnecke (4) eines Vorsatzgerätes (2) mehrteilig ausgebildet ist mit einem der Eintrittsöffnung (9) zugeordneten Mittelbereich, der aus einem nicht magnetisierbaren Material besteht.

6. Erntemaschine nach einem der Ansprüche 1 bis 5, **dadurch gekennzeichnet, daß** die aus einem nicht magnetisierbaren Material bestehenden Teile aus einem nicht ferromagnetischen Material bestehen.

## Claims

1. Harvesting machine for harvesting and/or for further processing harvested crops, having a feeder (10) comprising a metal-detecting system (19) for sensing metallic items in a monitoring region of a flow of harvested crops, upstream of which feeder (10) is arranged a front attachment (2) for taking in harvested crops, such for example as a front pickup attachment, the front attachment (2) having feeding and guiding elements associated with an inlet opening (9) of the feeder (10) for further processing the harvested crops, and the metal-detecting system (19) comprising magnets for generating a magnetic field (20), so that drive elements of the feeder (10) of the front attachment (2) and/or other components of the machine which are arranged upstream can be switched by means of a control signal as a function of electrical signals when pieces of metal are detected in the harvested crops, **characterised in that** the magnets of the metal-detecting system (19) are so aligned that a magnetic field (20) that is aligned in the direction of the inlet opening (9) of the feeder (10) and towards the front attachment (2) can be generated, and **in that** wall regions (25, 26, 27) which define the inlet opening (9) and movable parts (8, 24) of the front attachment (2) which are arranged directly upstream of the inlet opening (9) of the feeder (10) are composed of a not magnetisable material.

2. Harvesting machine according to claim 1, having a front attachment (2) which has a rotatable screw conveyor (4) arranged upstream of the inlet opening (9), **characterised in that** the sections of a circular feeding member (5, 6) which are arranged upstream of the inlet opening (9) are composed of a non-magnetisable material.

3. Harvesting machine according to claim 2, **characterised in that** the screw conveyor (4) has pushers (8) arranged upstream of the inlet opening (9) which are composed of a non-magnetisable material.

4. Harvesting machine according to one of machines 1 to 3, **characterised in that** the feeder (10) has two intake rollers (17, 18) arranged one above the other, the lower intake roller (17) being provided with the metal-detecting system (19), whose magnets are pivoted about its longitudinal central axis in such a way that they generate a magnetic field (20) which extends below the circumference of the associated upper intake roller (18) in the direction of the inlet opening (9) of the front attachment (2).

5. Harvesting machine according to one of claims 1 to 4, **characterised in that** the screw conveyor (4) of a front attachment (2) is of multi-piece design and has a central region, associated with the inlet opening (9), which is composed of non-magnetisable material.

6. Harvesting machine according to one of claims 1 to 5, **characterised in that** the parts composed of a non-magnetisable material are composed of a non-ferromagnetic material.

## Revendications

1. Moissonneuse pour récolter et/ou traiter ultérieurement des récoltes, comportant un transporteur (10) renfermant un dispositif de détection de métaux (19) destiné à la reconnaissance d'éléments métalliques dans une zone de surveillance d'un flux de récolte, devant lequel est disposé un outil adaptable (2) destiné à collecter la récolte, par exemple un outil adaptable du type pickup, l'outil adaptable (2) présentant des éléments de transport et de guidage associés à une ouverture d'entrée (9) du transporteur (10) en vue du traitement ultérieur de la récolte et le dispositif de détection de métaux (19) comprenant des aimants destinés à générer un champ magnétique (20), de sorte qu'en fonction de signaux électriques émis lors de la détection d'éléments métalliques dans la récolte, des éléments d'entraînement du transporteur (10), de l'outil adaptable (2) et/ou d'autres organes de machine disposés en aval puissent être mis à l'arrêt au moyen d'un signal de commande, **caractérisée en ce que** les aimants du dispositif de détection de métaux (19) sont orientés de telle sorte qu'un champ magnétique (20) dirigé dans le sens de l'ouverture d'entrée (9) du transporteur (10) vers l'outil adaptable (2) puisse être généré et **en ce que** les zones des parois (25, 26, 27) délimitant l'ouverture d'entrée (9) ainsi que les parties mobiles (8, 24) de l'outil adaptable (2) disposées directement devant l'ouverture d'entrée (9) du transporteur (10) sont constituées d'un matériau non magnétisable.

2. Moissonneuse selon la revendication 1, comportant un outil adaptable (2), lequel présente une vis sans fin transporteuse rotative (4) disposée devant l'ouverture d'entrée (9), **caractérisée en ce que** les segments d'une spire de transport (5, 6) disposée devant l'ouverture d'entrée (9) sont constitués d'un matériau non magnétisable.

3. Moissonneuse selon la revendication 2, **caractérisée en ce que** la vis sans fin transporteuse (4) présente un dispositif d'entraînement (8) disposé devant l'ouverture d'entrée (9), lequel dispositif est constitué d'un matériau non magnétisable.

4. Moissonneuse selon l'une quelconque des revendications 1 à 3, **caractérisée en ce que** le transporteur (10) présente deux cylindres d'alimentation (17, 18) disposés l'un au-dessus de l'autre, le cylindre d'alimentation (17) inférieur étant pourvu du dispositif de détection de métaux (19), dont les aimants sont tournés suivant leur axe médian longitudinal de telle sorte qu'ils génèrent un champ magnétique (20), lequel s'étend au-dessous de l'enveloppe du cylindre d'alimentation (18) supérieur associé, en direction de l'ouverture d'entrée (9) de l'outil adaptable (2).

5. Moissonneuse selon l'une quelconque des revendications 1 à 4, **caractérisée en ce que** la vis sans fin transporteuse (4) d'un outil adaptable (2) est conformée en plusieurs parties, avec une zone médiane associée à l'ouverture d'entrée (9), laquelle zone médiane est constituée d'un matériau non magnétisable.

6. Moissonneuse selon l'une quelconque des revendications 1 à 5, **caractérisée en ce que** les parties constituées d'un matériau non magnétisable sont constituées d'un matériau non ferromagnétique.
